Europäisches Patentamt

(19) **European Patent Office**

**Office européen des brevets**

(11) Veröffentlichungsnummer: **0 019 258**
**B1**

(12) **EUROPÄISCHE PATENTSCHRIFT**

(45) Veröffentlichungstag der Patentschrift:
01.02.84

(51) Int. Cl.³: **H 02 K 9/20**, H 02 K 55/04

(21) Anmeldenummer: **80102631.1**

(22) Anmeldetag: **12.05.80**

(54) Anordnung zur Kühlung einer tiefzukühlenden Erregerwicklung im Läufer einer elektrischen Maschine.

(30) Priorität: **22.05.79 DE 2920742**

(43) Veröffentlichungstag der Anmeldung:
**26.11.80 Patentblatt 80/24**

(45) Bekanntmachung des Hinweises auf die Patenterteilung:
**01.02.84 Patentblatt 84/5**

(84) Benannte Vertragsstaaten:
**CH FR GB LI SE**

(73) Patentinhaber: **SIEMENS AKTIENGESELLSCHAFT,**
**Berlin und München Wittelsbacherplatz 2,**
**D-8000 München 2 (DE)**

(72) Erfinder: **Schnapper, Christoph, Dr.,**
**Froebelstrasse 19-21, D-8520 Erlangen (DE)**
Erfinder: **Intichar, Lutz, Dr., Max-Busch-Strasse 12,**
**D-8520 Erlangen (DE)**

(56) Entgegenhaltungen:
**DE - B - 2 713 885**
**FR - A - 2 361 766**

**PROCEEDINGS OF THE SEVENTH INTERNATIONAL CRYOGENIC ENGINEERING CONFERENCE, London, 4-7. Juli 1978 R.G. SCURLOCK et al.: "The zero mechanical work thermal pump in the high speed rotating frame and its associated instabilities", Seiten 373-377**

BUNDESDRUCKEREI BERLIN

Anordnung zur Kühlung einer tiefzukühlenden Erregerwicklung im Läufer einer elektrischen Maschine

Die Erfindung bezieht sich auf eine Anordnung zur Kühlung einer tiefzukühlenden, insbesondere supraleitenden Erregerwicklung im Läufer einer elektrischen Maschine, insbesondere eines Turbogenerators, mit einer mitrotierenden Mischkammer, die ein Gemisch eines aus dampfförmigen und flüssigen Bestandteilen eines über eine Zuführungsleitung von außen zugeführten Kühlmittels enthält und an die eine erste Abführungsleitung zur Entnahme eines ersten Kühlmittelstromes an flüssigem Kühlmittel zur Kühlung der Erregerwicklung und an die in Nähe der Läuferachse eine zwischen Bereichen unterschiedlicher Temperatur verlaufende weitere Kühlmittelabführungsleitung angeschlossen sind, wobei die weitere Abführungsleitung als Zentrifugalpumpe zum Abpumpen eines weiteren Kühlmittelstromes an gasförmigem Kühlmittel aus der Mischkammer gestaltet ist und mindestens einen kälteren, im wesentlichen radial bezüglich der Läuferachse verlaufenden, in Achsferne führenden Leitungsteil enthält, der in eine mit wärmeren Teilen des Läufers thermisch verbundene Erwärmungsstrecke von in Achsnähe zurückführenden wärmeren Leitungsteilen mündet.

Eine derartige Kühlanordnung ist aus »Cryogenics«, Juli 1977, Seiten 429 bis 433 bekannt.

Bei dieser bekannten Kühlanordnung wird von einer Kühleinrichtung ausgegangen, wie sie beispielsweise in der Dissertation von A. Bejan mit dem Titel: »Improved Thermal Design of the Cryogenic Cooling System for a Superconducting Synchronous Generator«, Ph. D.-Thesis, Massachusetts Institute of Technology (USA), Dezember 1974, Seiten 145 bis 167 beschrieben ist. Gemäß dieser Kühleinrichtung wird ein aus einer externen Kühlmittelversorgungseinheit entnommenes Kühlmittel über eine zentrale Kühlmitteleinspeisungsleitung einer mitrotierenden, zentral angeordneten Mischkammer zugeführt. In dieser Mischkammer befindet sich ein Zweiphasengemisch aus flüssigem und gasförmigem Kühlmittel. Im Betriebszustand bei Rotation werden die Phasen dieses Zweiphasengemisches durch die auf die einwirkenden zentrifugalen Kräfte getrennt, und es lagert sich der Kühlmitteldampf in achsnahen und die Kühlmittelflüssigkeit in achsfernen Bereichen der Mischkammer an. Dabei fließt von der Mischkammer aus ein Kühlmittelstrom an flüssigem Kühlmittel über radial angeordnete Zuführungsleitungen der Erregerwicklung zu. Das Kühlmittel durchströmt dann die Erregerwicklung beispielsweise in bezüglich der Läuferachse paralleler Richtung. Da es sich aufgrund der dort auftretenden Verlustleistungen oder durch Wärmeübertragung von außen erwärmt, nimmt seine Dichte dementsprechend ab. Dadurch entsteht zwischen den radialen Zuführungs- und Rückleitungen eine hydrostatische Druckdifferenz, die zu einer Konvektionsströmung führt und eine Rückleitung des Kühlmittels über eine weitere, radial gerichtete Rückführungsleitung in die Mischkammer bewirkt. Die aufgenommene Wärmemenge führt zu einer Temperaturerhöhung und zu einer teilweisen Verdampfung des Kühlmittels. Die erforderliche Pumpwirkung zur Ausbildung der Strömung des Kühlmittels durch die Erregerwicklung wird somit durch diesen auf Dichteunterschieden beruhenden Thermosyphon-Effekt hervorgerufen.

Das zur Kühlung der Erregerwicklung erforderliche Kühlmittel in der Mischkammer wird zweckmäßig unter Unterdruck gehalten, damit es bei einer verhältnismäßig tiefen Temperatur siedet. Gemäß der genannten Literaturstelle »Cryogenics« kann hierzu die Kühlmittelabführungsleitung als Abpumpvorrichtung ausgebildet sein, wobei die Rotation und die Erwärmung des Kühlmittels ausgenutzt werden, um den gewünschten Unterdruck in der Mischkammer zu erzeugen. Bei dieser auch als Zentrifugalpumpe bezeichneten Abpumpvorrichtung wird kaltes Kühlmittelgas, welches der Mischkammer in der Nähe der Läuferachse entnommen wird, in einem oder mehreren kalten Radialrohren auf einen größeren Radius geleitet und dabei unter Einfluß der Zentrifugalkraft komprimiert. Danach wird es auf einer im wesentlichen parallel zu der Läuferachse verlaufenden Erwärmungsstrecke angewärmt und anschließend wieder über ein warmes Radialrohr zurück in die Nähe der Achse geführt, wo es über eine rotierende Helium-Kupplung aus dem rotierenden Teil der Maschine ausgeleitet und einer Kältemaschine zugeführt wird. Auf dem Weg von der achsfernen Erwärmungsstrecke zur Achse wird dabei das Kühlmittel wieder entspannt. Aufgrund der unterschiedlichen Dichte des Kühlmittels ist der Druckunterschied zwischen der achsnächsten und der achsfernsten Stelle auf der kalten Seite größer als auf der warmen Seite. Wenn am Austritt ungefähr Atmosphärendruck vorliegt, erhält man in der Mischkammer dann mit diesem Selbstpump-System der Zentrifugalpumpe den gewünschten Unterdruck.

Es wurde nun in Experimenten festgestellt, daß kurzfristig zwar mit einer solchen Zentrifugalpumpe ein Unterdruck erzeugt werden kann, praktisch aber keine stabilen Unterdruckverhältnisse auf diese Weise über längere Zeit zu erhalten sind. Sobald oder kurz bevor der berechnete Enddruck erreicht wird, steigt nämlich im allgemeinen der Druck in der Mischkammer wieder plötzlich auf Atmosphärendruck an (vgl. z. B. »Proceedings of the seventh International Cryogenic Engineering Conference (ICEC 7)«, London 1978, Seiten 373 bis 377). Der Grund für das Auftreten dieser Instabilitäten ist bisher nicht bekannt.

In der genannten Veröffentlichung ist jedoch angeregt, einen kälteren Leitungsteil der Zentrifugalpumpe thermisch an das kalte Helium-Bad in der Mischkammer anzukoppeln. Die thermische Ankopplung soll dabei nur bei einem bis zu einem vorbestimmten Radius führenden Leitungsstück des radial nach außen führenden kälteren Leitungsteils vorgenommen werden, um so eine Erhöhung der Druckdifferenz zu erreichen, die zwischen dem Fußpunkt und dem vorbestimmten Radius durch die in diesem Leitungsstück stehende Flüssigkeitssäule verursacht ist. Diese Erhöhung der Druckdifferenz hat eine Erniedrigung des Druckes in dem Helium-Bad zum Zweck. An dem vorbestimmten Radius schließt sich an das zusätzlich gekühlte Leitungsstück eine im wesentlichen U-förmige Konvektionsfalle an. Diese Konvektionsfalle weist ein zunächst von dem vorbestimmten Radius auf einen noch größeren Radius radial nach außen führenden Leitungsteil und daran anschließend auf den vorbestimmten Radius zurückführende Leitungsteile auf. Diese auf den vorbestimmten Radius zurückführenden Leitungsteile münden dort in wärmere, in Achsnähe zurückführende Leitungsteile der Zentrifugalpumpe, wobei ein bis zu dem vorbestimmten Radius reichendes Leitungsstück dieser wärmeren Leitungsteile als Erwärmungsstrecke ausgebildet ist. Es wurde jedoch festgestellt, daß sich auch bei dieser Ausbildung der Zentrifugalpumpe mit einem zusätzlich gekühlten Leitungsstück des kälteren Leitungsteils und einer radial weiter außenliegenden Konvektionsfalle stabile Pumpverhältnisse nicht unbedingt gewährleisten lassen.

Aufgabe der vorliegenden Erfindung ist es deshalb, die Anordnung zur Kühlung einer supraleitenden Erregerwicklung der eingangs genannten Art so zu verbessern, daß mit dem als Zentrifugalpumpe gestalteten Teil der weiteren Kühlmittelabführungsleitung ein stabiler Unterdruck in der Mischkammer aufrechterhalten werden kann.

Diese Aufgabe wird erfindungsgemäß mit den im Kennzeichen des Anspruchs 1 angegebenen Maßnahmen gelöst.

Diesen Maßnahmen liegt die Erkenntnis zugrunde, daß das Auftreten der Instabilität der Zentrifugalpumpe auf Wärmemengen zurückzuführen ist, die dem sich in dem kälteren radialen Leitungsteil befindlichen Kühlmittel zugeführt werden. Diese Wärmemengen können entweder von der Wand des kälteren Leitungsteils oder von den Leitungswänden an der Umlenkstelle an der Peripherie durch Wärmeübergang in das Kühlmittel gelangen, wenn die Wände an diesen Stellen wärmer sind als das Kühlmittel. So kann bei der in dem genannten Bericht der ICEC 7 beschriebenen Zentrifugalpumpe in der Erwärmungsstrecke erwärmtes Kühlmittel zunächst an den achsfernsten Punkt der ungekühlten Konvektionsfalle gelangen und dort auch in das in Achsnähe führende Leitungsstück übertreten, in welches das zusätzlich gekühlte Leitungsstück des kälteren Leitungsteils mündet. Andererseits können aber auch über das Kühlmittel selbst von den wärmeren Leitungsteilen her Wärmemengen in den kälteren Leitungsteil einströmen, und zwar durch Wärmediffusion oder durch Konvektion, wenn eine Strömung entgegen der gewünschten Strömungsrichtung wie z. B. im Falle von Wirbeln oder in Konvektionsschleifen möglich ist. Gelangen nun solche Wärmemengen in den kälteren Leitungsteil, so wird dort das Kühlmittel entsprechend erwärmt und die Dichte nimmt ab. Dadurch wird der Förderdruck der Zentrifugalpumpe herabgesetzt, so daß ein instabiles Verhalten auftreten kann. Der Förderdruck kann dann nicht mehr ausreichen, um den Druckunterschied zwischen dem Raum der Mischkammer und dem äußeren Druck aufrechtzuerhalten.

Die mit der Erfindung erreichten Vorteile bestehen somit darin, daß der Wärmestrom in das in dem kälteren radialen Leitungsteil der weiteren Abführungsleitung befindliche Kühlmittel durch die thermische Ankopplung des achsfernen Endstückes des kälteren Leitungsteils sowie der Einmündungsstelle in die Erwärmungsstrecke an kältere Teile des Läufers ausreichend klein gehalten wird. Mit dieser zusätzlichen Kühlung wird nämlich gewährleistet, daß das in den wärmeren Leitungsteilen, insbesondere in der Erwärmungsstrecke erwärmte und aufgrund von Konvektion zu dem kälteren Leitungsteil zurückströmende Kühlmittel an dieser gekühlten Stelle zumindest annähernd auf die Temperatur des in dem kälteren Leitungsteil abfließenden Kühlmittels abgekühlt wird und somit die Konvektion vermindert oder sogar ganz aufgehoben wird. Hiermit wird ein Eintritt des erwärmten Kühlmittels in die kälteren Leitungsteile der Zentrifugalpumpe verhindert.

Gemäß einer Weiterbildung der Kühlanordnung nach der Erfindung ist es besonders vorteilhaft, wenn der größte Strömungsquerschnitt des kälteren Leitungsteils der weiteren Abführungsleitung bei vorgegebenem Massendurchsatz an abgeführtem Kühlmittel höchstens halb so groß, vorzugsweise höchstens ein Drittel so groß ist wie der größte Strömungsquerschnitt der wärmeren, in Achsnähe zurückführenden Leitungsteile. Diese Maßnahme ist Gegenstand der europäischen Patentanmeldung 80 102 632.9 (Veröffentlichungsnummer 0 019 259) mit gleichem Anmelde- und Prioritätstag. Die Strömungsgeschwindigkeit in dem kälteren Leitungsteil kann dann ausreichend hoch eingestellt werden, indem ein entsprechend kleiner Strömungsquerschnitt gewählt wird. Je kleiner nämlich die Strömungsgeschwindigkeit des Kühlmittels ist, desto größer ist der in den kälteren Leitungsteil aufgrund von Konvektion gelangende Wärmestrom und desto kleiner wird der Förderdruck und desto eher neigt die Pumpe zu Instabilitäten. Mit der vorgesehenen Dimensionierung des Strömungsquerschnittes wird also erreicht, daß bei einem vorgegebenen Massendurchsatz die Strömungsgeschwindigkeit in dem kälteren Leitungsteil ausreichend groß wird, um aufgrund von Konvektion entstandene Wirbel an wärmerem Kühlmittel an einem Eindringen in das in dem kälteren Leitungsteil in Gegenrichtung abgeführte Kühlmittel zu hindern. Der Wärmestrom in das in diesem Leitungsteil der Abführungsleitung befindliche Kühlmittel läßt sich somit entsprechend klein halten.

Insbesondere kann vorteilhaft ein Teilstück der wärmeren Leitungsteile der weiteren Abführungsleitung in Strömungsrichtung des abgeführten Kühlmittels gesehen einen von dem vorbestimmten Strömungsquerschnitt des kälteren Leitungsteils auf den vorbestimmten Strömungsquerschnitt der wärmeren Leitungsteile sich allmählich erweiternden Strömungsquerschnitt haben. Diese Maßnahme ist ebenfalls Gegenstand der europäischen Patentanmeldung 80 102 632.9 (Veröffentlichungsnummer 0 019 259) mit gleichem Anmelde- und Prioritätstag. Der Strömungsquerschnitt dieses Teilstükkes läßt sich so an die mit zunehmender Temperatur zunehmende Zähigkeit und abnehmende Dichte des Kühlmittels anpassen.

Außerdem kann gegebenenfalls noch zur Begrenzung des Wärmestromes in das in dem kälteren Leitungsteil befindliche Kühlmittel vorteilhaft die Erwärmungsstrecke in der Nähe der Anschlußstelle an den kälteren Leitungsteil ein Teilstück einer Konvektionsfalle für das abzuführende Kühlmittel sein, während für das andere Teilstück dieser Konvektionsfalle ebenfalls eine thermische Ankopplung an kältere Läuferteile vorgesehen wird. Mit einer solchen Konvektionsfalle wird ebenfalls das Eindringen von in dem wärmeren Leitungsteil erwärmten Kühlmittel in den kälteren Leitungsteil verhindert.

Weitere vorteilhafte Ausbildungen der Anordnung zur Kühlung nach der Erfindung sind in den übrigen abhängigen Ansprüchen gekennzeichnet.

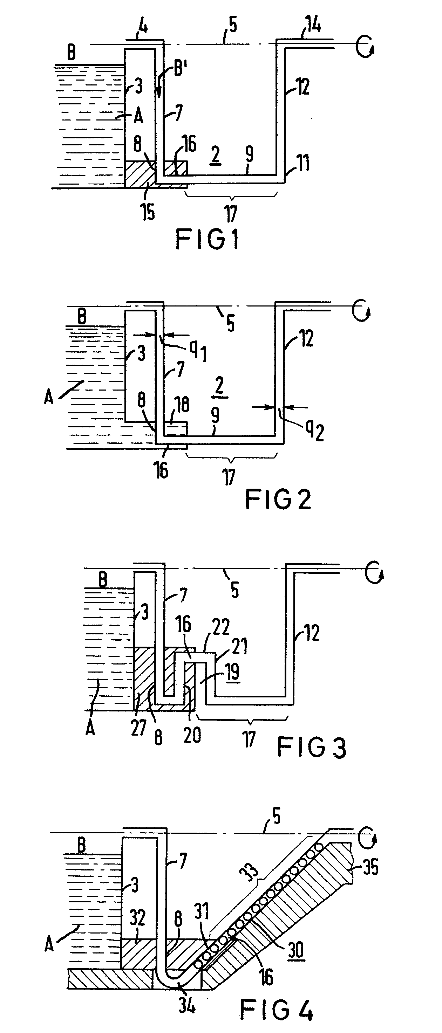

Die Erfindung wird nachstehend anhand der Zeichnung noch weiter erläutert. Es zeigen die Fig. 1 bis 4 jeweils schematisch als Längsschnitt eine als Zentrifugalpumpe gestaltete Kühlmittelabführungsleitung einer Kühlanordnung gemäß der Erfindung.

Bei der in Fig. 1 dargestellten Zentrifugalpumpe wird von einer Vorrichtung zur Unterdruckerzeugung in einem Kryostatbehälter ausgegangen, wie sie beispielsweise aus der Literaturstelle »Cryogenics«, Juli 1977, Seiten 429 bis 433 zu entnehmen ist. Mit dieser Pumpe, die Teil einer allgemein mit 2 bezeichneten Kühlmittelabführungsleitung ist, soll in einer in der Figur nur angedeuteten Mischkammer 3 ein Unterdruck ausgebildet werden. Die Mischkammer befindet sich zentral in einem nicht näher ausgeführten Läufer einer elektrischen Maschine, insbesondere eines Turbogenerators. Sie enthält im Betriebszustand der Maschine ein Zweiphasengemisch aus flüssigem und gasförmigem Kühlmittel A bzw. B. In der Figur wurde auf die Darstellung verzichtet, daß das Kühlmittel einer externen Kühlmittelversorgungseinheit entnommen und über eine Kühlmitteleinspeisungsleitung, die an einem Anschlußkopf des Läufers eine Kühlmittel-Kupplung enthält, der Mischkammer zugeführt wird. An der Kühlmittel-Kupplung, die beispielsweise aus der Literaturstelle »Siemens Forschungs- und Entwicklungsberichte«, Band 5, 1976, Nr. 1, Seite 13 bekannt ist, wird das Kühlmittel von feststehenden auf rotierende Teile der Maschine übergeleitet. Im Betriebszustand bei Rotation des Läufers sind die Phasen des Zweiphasengemisches in der Mischkammer 3 unter Einwirkung der an ihnen angreifenden Zentrifugalkräfte getrennt. Das in der Mischkammer vorhandene flüssige Kühlmittel dient zur Kühlung einer in der Figur nicht ausgeführten, tiefzukühlenden, insbesondere supraleitenden Erregerwicklung im Läufer. Als Kühlmittel für Supraleiter kommt im allgemeinen nur Helium, für andere tiefzukühlende Leiter ein entsprechendes kryogenes Medium wie z. B. Wasserstoff oder Stickstoff in Frage.

Mit Hilfe der Zentrifugalpumpe wird aus der Mischkammer 3 gasförmiges Kühlmittel B' an einer zentralen Entnahmestelle 4 in Nähe der Rotationsachse 5 abgesaugt. Der die Zentrifugalpumpe bildende Teil der Abführungsleitung 2 ist gemäß dem Längsschnitt der Figur U-förmig gestaltet. Er enthält mindestens einen bezüglich der Rotationsachse 5 radial verlaufenden, z. B. rohrförmigen Leitungsteil 7, mit dem der Kühlmitteldampf B' von der Achsnähe der Entnahmestelle 4 auf einen großen Radius bezüglich der Rotationsachse 5 gebracht wird. Ein achsfernes Endstück 8 dieses Leitungsteiles 7 mündet in ein beispielsweise rohrförmiges Verbindungsstück 9, das sich parallel zur Rotationsachse 5 erstreckt. An seinem dem Leitungsteil 7 abgewandten Ende ist das Endstück 11 eines weiteren rohrförmigen Leitungsteils 12 angeschlossen, der sich in radialer Richtung bezüglich der Rotationsachse 5 erstreckt und in Achsnähe in eine zentrale Kühlmittelaustrittsleitung 14 mündet. In dieser Austrittsleitung ist ebenfalls eine in der Figur nicht dargestellte rotierende Kühlmittel-Kupplung vorgesehen, mit der an einem Anschlußkopf des Läufers das Kühlmittelgas B' aus der Maschine herausgeleitet und dann beispielsweise einer externen Kühlmittelversorgungseinheit zugeführt wird.

Da sich der Anschlußkopf mit der Kühlmittelaustrittsleitung 14 im allgemeinen auf höherer Temperatur, beispielsweise auf Raumtemperatur, und die Entnahmestelle 4 für den Kühlmitteldampf B' aus der Mischkammer 3 auf Kryotemperatur befinden, muß der über die Zentrifugalpumpe abgeleitete Kühlmitteldampf B' ein entsprechendes Temperaturgefälle durchlaufen. Der auf der Seite der Mischkammer 3 liegende radiale Leitungsteil 7 der Zentrifugalpumpe wird deshalb auch als kalter Leitungsteil und der auf der Seite des Anschlußkopfes liegende radiale Leitungsteil 12 als warmer Leitungsteil bezeichnet. Das Verbindungsstück 9 zwischen diesen beiden Leitungsteilen stellt somit eine Erwärmungsstrecke für das Kühlmittel B' dar. Diese Erwärmungsstrecke kann zweckmäßig mit Teilen

des Läuferkörpers thermisch verbunden sein, um in diesen entsprechende Temperaturverhältnisse einzustellen.

Das den Raum der Mischkammer 3 an der Entnahmestelle 4 verlassende, kalte Kühlmittelgas B' wird in dem kalten radialen Leitungsteil 7 auf einen größeren Radius geleitet und dabei unter Einfluß der Zentrifugalkraft komprimiert. Danach wird das Kühlmittel in dem Verbindungsstück 9 angewärmt und anschließend wieder in die Nähe der Achse 5 über das wärmere radiale Leitungsteil 12 zurückgeführt, wo es dann den rotierenden Teil der Maschine über die Kühlmittel-Kupplung verläßt. Auf dem Weg von der Peripherie zur Achse wird dabei das Kühlmittel wieder entspannt. Aufgrund der unterschiedlichen Dichte des Kühlmittels ist der Druckunterschied zwischen der achsnächsten und achsfernsten Stelle auf der kalten Seite größer als auf der warmen Seite. Wenn am Austritt ungefähr Atmosphärendruck vorliegt, erhält man so an der Entnahmestelle 4 der Mischkammer 3 einen Unterdruck. Bei der Zentrifugalpumpe wird somit der bekannte Selbstpump-Effekt ausgenutzt.

Bei der Kühlanordnung wird vorteilhaft der von außen in das in dem kälteren radialen Leitungsteil 7 abgeführte Kühlmittel B' eindringende Wärmestrom ausreichend klein gehalten. Hierzu dient gemäß der Erfindung eine thermische Ankopplung zumindest des achsfernen Endes dieses Leitungsteils sowie des Einmündungsbereichs in den wärmeren Leitungsteil an noch kältere Stellen des Läufers. Gemäß dem Ausführungsbeispiel nach der Fig. 1 sind dementsprechend das achsferne Endstück 8 des kälteren Leitungsteils 7 und die Einmündungsstelle 16 in das Verbindungsstück 9 über einen Körper 15 aus gut wärmeleitendem Material wie beispielsweise Kupfer oder Aluminium thermisch leitend mit dem flüssigen Kühlmittel A in der Mischkammer 3 verbunden. Dieses Kühlmittel ist nämlich im allgemeinen kälter als der komprimierte Kühlmitteldampf in dem Endstück 8 und an der Einmündungsstelle 16. Auf diese Weise kann dem Kühlmitteldampf an dieser Stelle Wärme entzogen und so seine Temperatur herabgesetzt werden. Dann befindet sich das kältere, dichtere Kühlmittel auf größerem radialen Abstand bzgl. der Achse 5, so daß keine Auftriebskräfte wirken und sich deshalb auch keine Wirbel bilden. Die Erwärmungsstrecke in dem Verbindungsstück 9, in der eine Temperaturerhöhung des Kühlmitteldampfes B' in der Abführungsleitung 2 erfolgt, ist in der Figur mit 17 bezeichnet.

Die in Fig. 2 dargestellte Zentrifugalpumpe entspricht im wesentlichen der Ausführungsform nach Fig. 1. Diese Zentrifugalpumpe unterscheidet sich lediglich von der Ausführungsform nach Fig. 1 dadurch, daß das Endstück 8 ihres kälteren radialen Leitungsteils 7 und die Einmündungsstelle 16 des Verbindungsstücks 9 nicht indirekt über einen thermisch gut leitenden Körper mit dem flüssigen Kühlmittel A in der Mischkammer 3 thermisch verbunden sind, sondern daß das Endstück 8 und die Einmündungsstelle 16 direkt von dem flüssigen Kühlmittel umspült werden, indem sie sich in einem entsprechenden, mit der Mischkammer verbundenen Kühlmittelkanal 18 befinden. Es wird so ein direkter Wärmeaustausch zwischen diesen Stellen der Zentrifugalpumpe und dem kälteren Kühlmittel A bewirkt. Die Erwärmungsstrecke 17 für das Kühlmittelgas ist dann der außerhalb des Kühlmittelbades verlaufende Teil des Verbindungsstücks 9.

Gegebenenfalls kann bei dieser Ausführungsform gemäß Fig. 2 eine thermische Ankopplung des kälteren Leitungsteils 7 und der Einmündungsstelle 16 auch dadurch erhalten werden, daß der gesamte Leitungsteil 7 und die Einmündungsstelle 16 des Verbindungsstücks 9 in der Mischkammer 3 angeordnet sind. Das achsnahe, als Entnahmestelle 4 gestaltete Ende des Leitungsteils 7 ragt dann in den mit gasförmigem Kühlmittel B gefüllten Teilraum der Mischkammer 3 hinein.

Ferner kann vorteilhaft bei der Kühlanordnung nach der Erfindung der in Fig. 2 mit $q_1$ bezeichnete maximale Strömungsquerschnitt des kälteren Leitungsteils 7 höchstens halb so groß wie der maximale, mit $q_2$ bezeichnete Strömungsquerschnitt der an den kälteren Leitungsteil 7 angeschlossenen und in Achsnähe zurückführenden wärmeren Teile 9 und 12 der Kühlmittelabführungsleitung 2 gewählt werden. Vorzugsweise ist der maximale Strömungsquerschnitt $q_1$ des kälteren Leitungsteils 7 höchstens ein Drittel des maximalen Strömungsquerschnittes $q_2$ der wärmeren Leitungsteile 9, 12. Mit dieser Dimensionierung wird nämlich erreicht, daß die Strömungsgeschwindigkeit in dem kälteren Leitungsteil 7 erhöht wird und damit Konvektionswirbel am Eindringen in diesen Leitungsteil gehindert werden.

Andererseits muß der Querschnitt ausreichend groß gewählt werden, daß der Druckabfall infolge Strömungsreibung in der gesamten Kühlmittelabführungsleitung 2 klein ist gegenüber dem Förderdruck der Zentrifugalpumpe. Bei gleichen Strömungsquerschnitten $q_1$ und $q_2$ würde der wesentliche Druckabfall wegen der größeren dynamischen Zähigkeit und der kleineren Dichte des wärmeren Kühlmittels im wärmeren Leitungsteil auftreten. Man kann deshalb $q_1$ vorteilhaft deutlich kleiner wählen als $q_2$, ohne daß der gesamte Druckabfall wesentlich ansteigt.

Der Strömungsquerschnitt der Abführungsleitung 2 braucht sich an der Einmündungsstelle 16 in die Erwärmungsstrecke 17 nicht unmittelbar von dem Querschnitt $q_1$ des kälteren Leitungsteils 7 auf den Querschnitt $q_2$ des wärmeren Leitungsteils 12 in dem vorbestimmten Maße zu erweitern, so daß die Erwärmungsstrecke 17 den Strömungsquerschnitt $q_2$ hat. Vorteilhaft kann auch ein allmählicher Übergang auf den größeren Strömungsquerschnitt vorgesehen sein. Hierdurch läßt sich eine Anpassung an die mit zunehmender Temperatur des Kühlmittels B' zunehmende Zähigkeit und abnehmende Dichte des Kühlmittels erreichen.

Bei der Kühlanordnung nach der Erfindung kann eine Konvektion von erwärmtem Kühlmittel in den kälteren radialen Leitungsteil der Abführungsleitung zusätzlich noch durch eine Konvektionsfalle weiter vermindert werden. Wie in Fig. 3 dargestellt, ist dementsprechend das Verbindungsstück der Abführungsleitung an der Einmündungsstelle des kälteren radialen Leitungsteils 7, 8 als U-förmiger Syphon 19 gestaltet. Dieser Syphon liegt auf einem vergleichsweise kleineren Radius als die Erwärmungsstrecke 17 und besteht aus zwei parallelen, radial verlaufenden Syphonrohren 20 und 21, die über ein achsparallel verlaufendes Zwischenrohr 22 miteinander verbunden sind. Das in der Erwärmungsstrecke 17 angewärmte Kühlmittelgas erfährt zwar durch die Zentrifugalkraft einen Auftrieb zur Rotationsachse hin und kann so gegebenenfalls in das Syphonrohr 21 eindringen; es wird jedoch durch die Auftriebskraft daran gehindert, in das Syphonrohr 20 zu strömen. Mit diesem Syphon wird somit eine Konvektion des Kühlmittels von der Erwärmungsstrecke 17 zu dem kälteren radialen Leitungsteil 7, 8 verhindert. Der Syphon stellt deshalb eine Konvektionsfalle für das in der Erwärmungsstrecke 17 erwärmte Kühlmittelgas dar, wobei die Einmündungsstelle 16 in die wärmeren Leitungsteile im Bereich des Zwischenrohres 22 liegt. Außerdem ist bei dieser Zentrifugalpumpe eine thermische Ankopplung ihres Syphons 19 an kältere Teile des Läufers wie bei der Ausführungsform nach Fig. 1 vorgesehen. Dementsprechend erfolgt die thermische Ankopplung des achsenfernen Endstücks 8 des Leitungsteils 7 sowie des einen, dazu benachbarten Schenkels 20 des U-förmigen Syphons 19 über einen Körper 27 aus thermisch gut leitendem Material an das flüssige Kühlmittel A in dem Bad der Mischkammer 3.

Gegenüber dem Ausführungsbeispiel einer Zentrifugalpumpe nach Fig. 3 kann eine thermische Ankopplung durch einen direkten Wärmeaustausch mit kälterem Kühlmittel entsprechend dem Ausführungsbeispiel nach Fig. 2 dadurch erreicht, daß das achsferne Endstück 8 des kälteren Leitungsteils sowie der Schenkel 20 des Syphons 19 einschließlich der Einmündungsstelle 16 im Bereich des Zwischenrohres 22 direkt von dem flüssigen Kühlmittel A der Mischkammer 3 gekühlt werden.

Bei den Ausführungsbeispielen von Zentrifugalpumpen nach den Fig. 1 bis 3 wurde davon ausgegangen, daß die jeweilige Erwärmungsstrecke zwischen kälteren und wärmeren Leitungsteilen der Kühlmittelabführungsleitung stets parallel bezüglich der Rotationsachse verläuft. Für die Erfindung ist jedoch diese Lage der Erwärmungsstrecke unwesentlich. Gemäß dem Ausführungsbeispiel einer Zentrifugalpumpe nach Fig. 4 kann deshalb die Erwärmungsstrecke zusammen mit einem an sie angeschlossenen wärmeren Leitungsteil einen gemeinsamen Leitungsteil 30 bilden, der bezüglich der Rotationsachse 5 schräg verläuft. Das achsferne Endstück 8 des kalten, radial verlaufenden Leitungsteils 7 sowie ein achsfernes Teilstück 31 des schräg verlaufenden Leitungsteils 30 sind über einen Körper 32 aus gut wärmeleitendem Material an das kältere, flüssige Kühlmittel A in der Mischkammer 3 thermisch angekoppelt. Die Erwärmungsstrecke 33 für das gasförmige Kühlmittel ist somit der sich zwischen dem Körper 32 und der Rotationsachse 5 erstreckende Teil des Leitungsteils 30. Die Einmündungsstelle in diese Strecke ist mit 16 bezeichnet. Das Endstück 8 und das Teilstück 31 sind über ein gekrümmtes Rohrstück 34 miteinander verbunden. Dieses sich auf größerem Radius als die Erwärmungsstrecke 33 des Leitungsteils 30 befindliche Rohrstück stellt ebenfalls einen als Konvektionsfalle dienenden Syphon dar.

Für die Erfindung ist es ferner ohne Bedeutung, ob die Erwärmungsstrecke der Zentrifugalpumpe auf dem Umfang eines rotierenden Zylinders oder eines rotierenden Kegels als Spirale oder Schlange ausgebildet ist. Im Ausführungsbeispiel nach Fig. 4 ist eine Spiralform der Erwärmungsstrecke 33 angenommen, wobei diese auf der kegelmantelförmigen Innenseite eines in der Figur nur teilweise ausgeführten, drehmomentübertragenden Kegelmantels 35 angeordnet ist.

Bei den Ausführungsbeispielen nach den Fig. 1 bis 4 wurde angenommen, daß die Kühlmittelabführungsleitung 2 nur einen einzigen Führungskanal für das Kühlmittel aufweist. Gegebenenfalls können aber auch mehrere parallelgeschaltete Kanäle vorgesehen werden. Hiermit lassen sich zu große Druckabfälle in der Abführungsleitung vermeiden. Zweckmäßig werden dementsprechend der kältere Leitungsteil 7 und mindestens ein wesentliches Teilstück der daran angeschlossenen Erwärmungsstrecke 17 als parallelgeschaltete Kanäle ausgebildet. Eine Wiedervereinigung der durch diese Kanäle geführten Kühlmittelströme erfolgt dann frühestens nach diesem Teilstück der Erwärmungsstrecke und insbesondere erst nach Durchlaufen der wärmeren radialen Leitungsteile in der Nähe der Rotationsachse 5.

**Patentansprüche**

1. Anordnung zur Kühlung einer tiefzukühlenden, insbesondere supraleitenden, Erregerwicklung im Läufer einer elektrischen Maschine, insbesondere eines Turbogenerators, mit einer mitrotierenden Mischkammer (3), die ein Gemisch eines aus dampfförmigen und flüssigen Bestandteilen (B bzw. A) eines über eine Zuführungsleitung von außen zugeführten Kühlmittels enthält und an die eine erste Abführungsleitung zur Entnahme eines ersten Kühlmittelstromes an flüssigem Kühlmittel (A) zur Kühlung der Erregerwicklung und an die in Nähe der Läuferachse (5) eine zwischen Bereichen unterschiedlicher Temperatur verlaufende weitere Kühlmittelabführungsleitung (2) angeschlossen sind, wobei die weitere Abführungsleitung (2) als Zentrifugalpumpe zum Abpumpen eines weiteren Kühlmittelstromes an gasförmigem Kühlmittel (B) aus der Mischkammer (3) gestaltet ist und mindestens einen kälteren, im wesentlichen radial bezüglich der Läuferachse (5) verlaufenden, in Achsferne führenden Leitungsteil (7) enthält, der in eine mit wärmeren Teilen des Läufers thermisch verbundene Erwärmungsstrecke (17, 33) von in Achsnähe zurückführenden wärmeren Leitungsteilen (9, 12, 30) mündet, dadurch gekennzeichnet, daß eine thermische Ankopplung des achsfernen Endstückes (8) des kälteren Leitungsteils (7) sowie der Einmündungsstelle (16) in die Erwärmungsstrecke (17, 33) an kältere Teile des Läufers vorgesehen ist.

2. Anordnung zur Kühlung nach Anspruch 1, dadurch gekennzeichnet, daß ein Verbindungskörper (15; 27; 32) aus gut wärmeleitendem Material zwischen dem achsfernen Endstück (8) des kälteren Leitungsteils (7) und der Einmündungsstelle (16) einerseits sowie dem flüssigen Kühlmittel (A) andererseits vorgesehen ist.

3. Anordnung zur Kühlung nach Anspruch 1, dadurch gekennzeichnet, daß zumindest das achsferne Endstück (8) des kälteren Leitungsteils (7) sowie die Einmündungsstelle (16) von dem flüssigen Kühlmittel (A) direkt umspült sind.

4. Anordnung zur Kühlung nach Anspruch 1, dadurch gekennzeichnet, daß das achsferne Endstück (8) des kälteren Leitungsteils (7) sowie die Einmündungsstelle (16) von dem flüssigen Kühlmittel (A) indirekt über mindestens einen Wärmetauscher umspült sind.

5. Anordnung zur Kühlung nach einem der Ansprüche 1 bis 4, dadurch gekennzeichnet, daß der größte Strömungsquerschnitt ($q_1$) des kälteren Leitungsteils (7) der weiteren Abführungsleitung (2) höchstens halb so groß, vorzugsweise höchstens ein Drittel so groß ist wie der größte Strömungsquerschnitt ($q_2$) der wärmeren, in Achsnähe zurückführenden Leitungsteile (9, 12).

6. Anordnung zur Kühlung nach Anspruch 5, dadurch gekennzeichnet, daß ein Teilstück der wärmeren Leitungsteile (9, 12) der weiteren Abführungsleitung (2) in Strömungsrichtung des abgeführten Kühlmittels (B') gesehen einen von dem vorbestimmten Strömungsquerschnitt ($q_1$) des kälteren Leitungsteils (7) auf den vorbestimmten Strömungsquerschnitt ($q_2$) der wärmeren Leitungsteile (9, 12) sich allmählich erweiternden Strömungsquerschnitt hat.

7. Anordnung zur Kühlung nach einem der Ansprüche 1 bis 6, dadurch gekennzeichnet, daß die Erwärmungsstrecke (17) in der Nähe der Anschlußstelle an den kälteren Leitungsteil (7) ein Teilstück einer Konvektionsfalle (19) für das abzuführende Kühlmittel (B') ist und daß für das andere Teilstück der Konvektionsfalle (19) eine thermische Ankopplung an kältere Teile des Läufers vorgesehen ist.

8. Anordnung zur Kühlung nach Anspruch 7, dadurch gekennzeichnet, daß die Konvektionsfalle (19) ein U-förmig gestalteter Leitungsteil ist.

9. Anordnung zur Kühlung nach Anspruch 7 oder 8, dadurch gekennzeichnet, daß die Konvektionsfalle auf größerem Radius als die wärmeren Leitungsteile (17, 12) der weiteren Abführungsleitung (2) angeordnet ist.

10. Anordnung zur Kühlung nach einem der Ansprüche 1 bis 9, dadurch gekennzeichnet, daß die wärmeren Leitungsteile (30) der weiteren Abführungsleitung (2) bezüglich der Läuferachse (5) schräg angeordnet sind.

11. Anordnung zur Kühlung nach einem der Ansprüche 1 bis 9, dadurch gekennzeichnet, daß die wärmeren Leitungsteile der weiteren Abführungsleitung (2) mindestens einen im wesentlichen parallel zu der Läuferachse (5) verlaufenden, achsfernen Leitungsteil (9) mit der Erwärmungsstrecke (17) für das abgeführte Kühlmittel (B') sowie einen weiteren im wesentlichen radial bezüglich der Läuferachse (5) verlaufenden Leitungsteil (12) enthalten.

12. Anordnung zur Kühlung nach einem der Ansprüche 1 bis 11, dadurch gekennzeichnet, daß der kältere Leitungsteil und zumindest ein daran angeschlossenes Teilstück der wärmeren Leitungsteil der Kühlmittelabführungsleitung als parallelgeschaltete Kühlmittelführungskanäle ausgebildet sind.

## Claims

1. An arrangement for cooling an exciting winding, which is to be cooled to a low temperature, particularly a superconductive winding, in the rotor of an electrical machine, in particular a turbogenerator, having a co-rotating mixing chamber (3) which contains a mixture of vaporous and liquid components (B and A) of a coolant which is supplied from the outside through a supply line, and to which chamber are connected a first discharge line for the withdrawal of a first stream of liquid coolant (A) which serves to cool the exciting winding, and, in the vicinity of the rotor axis (5), a further coolant discharge line (2) which extends between regions of different temperature, wherein the further discharge line (2) forms a centrifugal pump for pumping a further stream of gaseous coolant (B) out of the mixing chamber (3), and contains at least one cooler line section (7) which extends essentially radially with respect to the rotor axis (5), leads away from the axis, and discharges into a heating section (17, 33) which is thermally connected to hotter parts of the rotor and consists of warmer line sections (9, 12, 30) which return towards the neighbourhood of the axis, characterised in that a thermal coupling is provided between the end portion (8) remote from the axis of the cooler line section (7) together with the entry point (16) into the heating section (17, 33) and colder parts of the rotor.

2. A cooling arrangement according to Claim 1, characterised in that a connecting body (15; 27; 32) made of good heat-conducting material is arranged between the end portion (8), remote from the axis, of the cooler line section (7) and the entry point (16), on the one hand, and the liquid coolant (A), on the other hand.

3. A cooling arrangement according to Claim 1, characterised in that, at least the end portion (8) remote from the axis, of the cooler line section (7) and the entry point (16) are directly washed by the liquid coolant (A).

4. A cooling arrangement according to Claim 1, characterised in that the end portion (8) remote from the axis, of the cooler line section (7) and the entry point (16) point (16) are indirectly washed by the liquid coolant (A) by way of at least one heat exchanger.

5. A cooling arrangement according to one of Claims 1 to 4, characterised in that the largest flow cross-section ($q_1$) of the cooler line section (7) of the further discharge line (2) is at most half as large, preferably at most one-third as large, as the largest flow cross-section ($q_2$) of the warmer line sections (9, 12) which return towards the neighbourhood of the axis.

6. A cooling arrangement according to Claim 5, characterised in that part of the warmer linie sections (9, 12) of the further discharge line (2), viewed in the direction of flow of the discharged coolant (B'), has a flow cross-section which gradually widens from the predetermined flow cross-section ($q_1$) of the cooler line section (7) to the predetermined flow cross-section ($q_2$) of the warmer line sections (9, 12).

7. A cooling arrangement according to one of Claims 1 to 6, characterised in that the heating section (17) in the vicinity of the connection point to the cooler line section (7) represents part of a convection trap (19) for the coolant (B') which is to be discharged, and that a thermalcoupling to colder parts of the rotor is provided to the other part of the convection trap (19).

8. A cooling arrangement according to Claim 7, characterised in that the convection trap (19) is a U-shaped line section.

9. A cooling arrangement according to Claim 7 or Claim 8, characterised in that the convection trap is arranged at a larger radius than the warmer line sections (17, 12) of the further discharge line (2).

10. A cooling arrangement according to one of Claims 1 to 9, characterised in that the warmer line sections (30) of the further discharge line (2) are arranged obliquely relative to the rotor axis (5).

11. A cooling arrangement according to one of Claims 1 to 9, characterised in that the warmer line sections of the further discharge line (2) include at least one line section (9) which runs essentially parallel to and spaced from the rotor axis (5), having the heating section (17) for the discharged coolant (B'), and include a further line section (12) which runs essentially radially relative to the rotor axis (5).

12. A cooling arrangement according to one of Claims 1 to 11, characterised in that the cooler line section and at least one portion connected thereto, of the warmer line sections of the coolant discharge line are formes as coolant-conveying channels connected in parallel.

**Revendications**

1. Dispositif pour le refroidissement d'un enroulement d'excitation, notamment supraconducteur, à réfrigérer à une température très basse, dans le rotor d'une machine électrique, en particulier d'un turbo-alternateur, avec une chambre de mélange (3) tournant en même temps et qui contient un mélange constitué par des parties constitutives gazeuses et liquides (B et A) d'un réfrigérant amené de l'extérieur par une conduite d'alimentation et à laquelle sont reliées une première conduite d'évacuation pour prélever un premier courant de réfrigérant constitué par le réfrigérant liquide (A) pour refroidir l'enroulement d'excitation et, dans le voisinage de l'axe (5) du rotor, une seconde conduite d'évacuation de réfrigérant (2), s'étendant entre des zones de températures différentes, la seconde conduite d'évacuation (2) étant réalisée sous la forme d'une pompe centrifuge pour évacuer de la chambre de mélange (3) un second courant de réfrigérant constitué par le réfrigérant gazeux (B), et comporte au moins une section de conduite (7) plus froide, s'étendant sensiblement radialement par rapport à l'axe (5) du rotor en s'éloignant de l'axe et débouchant dans un tronçon de chauffage (17, 33) relié thermiquement à des parties plus chaudes du rotor et constitué par des sections de conduits plus chaudes (9, 12, 30) renvoyées près de l'axe, caractérisé par le fait qu'il est prévu un couplage thermique entre la pièce terminale (8), éloignée de l'axe, de la section de conduite (7) plus froide, de même qu'entre l'embouchure (16) dans le tronçon de chauffage (17, 33) et des parties plus froides du rotor.

2. Dispositif pour le refroidissement selon la revendication 1, caractérisé par le fait qu'il est prévu un corps de liaison (15; 27; 32) en un matériau bon conducteur de la chaleur entre la pièce terminale (8), éloignée de l'axe, de la section de conduite plus froide (7) et l'embouchure (16), d'une part, et le réfrigérant liquide (A), d'autre part.

3. Dispositif pour le refroidissement selon la revendication 1, caractérisé par le fait qu'au moins la pièce terminale (8) de la section de conduite (7) plus froide, qui est éloignée de l'axe, de même que l'embouchure (16) sont balayées directement par le réfrigérant liquide (A).

4. Dispositif pour le refroidissement selon la revendication 1, caractérisé par le fait que la pièce terminale (8) de la section de conduite (7) plus froide, qui est éloignée de l'axe, de même que l'embouchure (16) sont balayées indirectement par le réfrigérant (A) par l'intermédiaire d'au moins un échangeur de chaleur.

5. Dispositif pour le refroidissement selon l'une des revendications 1 à 4, caractérisé par le fait que la plus grande section transversale de passage ($q_1$) de la section de conduite plus froide (7) de la seconde conduite d'évacuation (2), est au plus égale à la moitié, de préférence au plus égale au tiers de la plus grande section transversale de passage ($q_2$) des sections de conduite (9, 12) plus chaudes et renvoyées près de l'axe.

6. Dispositif pour le refroidissement selon la revendication 5, caractérisé par le fait qu'un morceau partiel des sections de conduite plus chaudes (9, 12) de la seconde conduite d'évacuation (2) possède, si l'on regarde dans la direction de l'écoulement du réfrigérant évacué (B'), une section transversale de passage qui s'élargit progressivement de la section transversale de passage prédéterminée ($q_1$) de la section de conduite plus froide (7) à la section transversale de passage prédéterminée ($q_2$) des sections de conduite plus chaudes (9, 12).

7. Dispositif pour le refroidissement selon l'une des revendications 1 à 6, caractérisé par le fait que le tronçon de chauffage (17) est, dans le voisinage du point de raccordement à la section de conduite plus froide (7), un morceau partiel d'un piège de convection (19) pour le réfrigérant à évacuer (B') et que pour l'autre morceau du piège de convection (19) il est prévu un couplage thermique avec des parties plus froides du rotor.

8. Dispositif pour le refroidissement selon la revendication 7, caractérisé par le fait que le piège de convection (19) est une partie de conduite ayant la forme d'un U.

9. Dispositif pour le refroidissement selon la revendication 7 ou 8, caractérisé par le fait que le piège de convection est disposé sur un plus grand rayon que les sections de conduites plus chaudes (17, 12) de la seconde conduite d'évacuation (2).

10. Dispositif pour le refroidissement selon l'une des revendications 1 à 9, caractérisé par le fait que les sections de conduite plus chaudes (30) de la seconde conduite d'évacuation (2) sont disposées obliquement par rapport à l'axe (5) du rotor.

11. Dispositif pour le refroidissement selon l'une des revendications 1 à 9, caractérisé par le fait que les sections de conduite plus chaudes de la section de conduite d'évacuation (2) comportent au moins une section de conduite (9) éloignée de l'axe et s'étendant sensiblement en direction parallèle à l'axe (5) du rotor, avec le tronçon de chauffage (17) pour le réfrigérant évacué (B'), ainsi qu'une autre section de conduite (12) s'étendant sensiblement en direction radiale par rapport à l'axe (5) du rotor.

12. Dispositif pour le refroidissement selon l'une des revendications 1 à 11, caractérisé par le fait que la section de conduite plus froide et au moins une pièce partielle des sections de conduite plus chaudes de la conduite d'évacuation du réfrigérant, qui lui est reliée, sont réalisées sous la forme de canaux de guidage du réfrigérant, associés en parallèle.

FIG 1

FIG 2

FIG 3

FIG 4